# EUROPEAN PATENT SPECIFICATION

(11) **EP 4 758 821 B1**
(45) Date of publication and mention of the grant of the patent: **19.08.2026**
(21) Application number: 24782326.3
(22) Date of filing: 19.09.2024
(51) Int. Cl.: H04L 9/40

(54) **DETECTION OF SECURITY RISKS IN COMMUNICATION NETWORKS**
ERKENNUNG VON SICHERHEITSRISIKEN IN KOMMUNIKATIONSNETZEN
DÉTECTION DE RISQUES DE SÉCURITÉ DANS DES RÉSEAUX DE COMMUNICATION

(30) Priority: 22.09.2023 FI 20236053
(43) Date of publication of application: 17.06.2026
(73) Proprietor: Elisa Oyj, 00520 Helsinki (FI)
(72) Inventor: MYRBERG, Jesse, 00520 Helsinki (FI); KATAJISTO, Mika, 00520 Helsinki (FI)
(74) Representative: Laine IP Oy
(86) International application number: PCT/FI2024/050487
(87) International publication number: WO 2025/062066

(56) References cited:
- US-A1- 2022 131 760
- BINGCHUAN TIAN ET AL: "Safely and automatically updating in-network ACL configurations with intent language", DATA COMMUNICATION, ACM, 2 PENN PLAZA, SUITE 701NEW YORKNY10121-0701USA, 19 August 2019 (2019-08-19), pages 214 - 226, XP058440074, ISBN: 978-1-4503-5956-6, DOI: 10.1145/3341302.3342088
- BRINGHENTI DANIELE ET AL: "Improving the Formal Verification of Reachability Policies in Virtualized Networks", IEEE TRANSACTIONS ON NETWORK AND SERVICE MANAGEMENT, IEEE, USA, vol. 18, no. 1, 18 December 2020 (2020-12-18), pages 713 - 728, XP011841335, [retrieved on 20210310], DOI: 10.1109/TNSM.2020.3045781

## Description

### FIELD

The present disclosure relates to communication networks and more specifically, to detection of security risks in such networks.

### BACKGROUND

Firewalls may be used to supervise and control traffic in communication networks. More specifically, firewalls may be used to block unwanted traffic between two communication networks. Detection of security risks of firewalls is therefore important, for example to ensure proper operation of a network connected to Internet. Detection of security risks should consume as few resources as possible though. There is therefore a need in general to provide enhancements for detection of security risks, to enable efficient usage of the network and its resources.

US 2022/0131760 A1 discloses methods and systems for network verification.

### SUMMARY

According to some aspects, there is provided the subject-matter of the independent claims. Some embodiments are defined in the dependent claims. The invention is set out in the appended set of claims.

### BRIEF DESCRIPTION OF THE DRAWINGS

FIGURE 1 illustrates an example network scenario in accordance with at least some embodiments;
FIGURE 2 illustrates an example process in accordance with at least some embodiments;
FIGURE 3 illustrates an example apparatus capable of supporting at least some embodiments;
FIGURE 4 illustrates a first conversion example in accordance with at least some embodiments;
FIGURE 5 illustrates a second conversion example in accordance with at least some embodiments;
FIGURE 6 illustrates an example of determination of a Boolean value in accordance with at least some embodiments; and
FIGURE 7 is a flow graph of a method in accordance with at least some embodiments.

### EMBODIMENTS

Detection of security risks in communication networks may be enhanced by the procedures described herein. More specifically, detection of security risks may be enhanced by determining a Boolean value solution over a Boolean expression of a configurations of at least one firewall between two communication networks, such as Internet and a network of an operator. A device in the network of the operator may be configured to provide a private service so if the Boolean value solution is true, a security risk may be detected and at least one of the at least one firewall reconfigured accordingly. It is therefore possible to perform the detection of security risks for one firewall quickly, or even for multiple firewalls at once, instead of performing said detection one-by-one using a brute-force approach. Consequently, detection of security risks can be enhanced by enabling more efficient operation and reducing resource consumption.

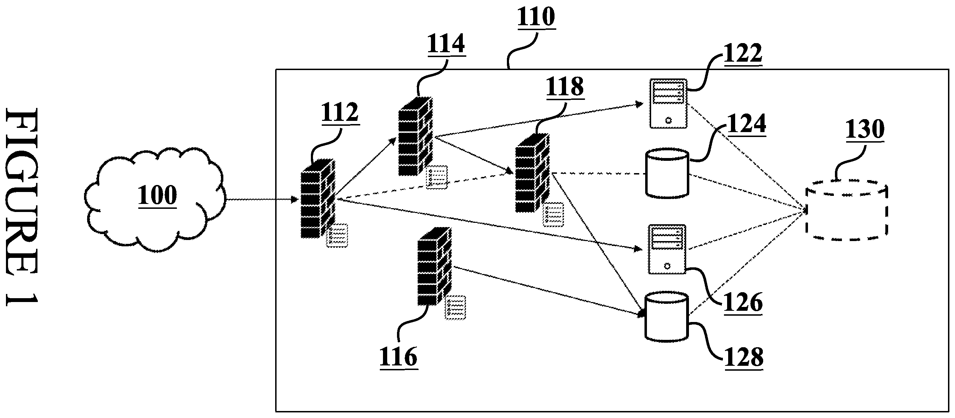

FIGURE 1 illustrates an example network scenario in accordance with at least some embodiments. In FIGURE 1, Internet is denoted by 100 and a network of an operator is denoted by 110. The operator network 110 comprises four firewalls 112, 114, 116 and 118. The firewall 112 is an Internet firewall, possibly comprising a Network Address Translator, NAT. The internet firewall 112 may be located in the operator network 112, as illustrated in FIGURE 1. In some embodiments, the Internet firewall 112 may be outside, or at the edge, of the operator network 110 though. The firewalls 114, 116 and 118 are internal firewalls of the operator, located in the operator network 110. In general, embodiments of the present disclosure may be applied for at least one firewall between two communication networks. That is, Internet 100 may be referred to as a first communication network and the network of the operator 110 may be referred to as a second communication network.

The operator network 110 illustrated in FIGURE 1 further comprises devices 122, 124, 126 and 128. The devices 122, 124, 126 and 128 may be for example databases. Alternatively, or in addition, one or more of the devices 122, 124, 126 and 128 may be configured to run applications, Application Programming Interfaces, APIs, etc. For example, the devices 122 and 126 may be configured to provide public services, i.e., services to which access from Internet 100 is allowed. The devices 124 and 128 may be configured to provide private services, i.e., services to which access from Internet 100 is not allowed. In addition, service metadata database is denoted by 130. Service metadata database 130 may for example store information about the service provided by the devices 122 - 128, e.g., whether each of the services should be publicly accessible. That is, service metadata database 130 may store information about whether the service provided by each of the devices 122 - 128 is public or private.

The Internet firewall 112 may be connected to Internet 100 via a communication link, like a wired or a wireless link. The solid lines in FIGURE 1 in general show links via which transmissions of packets are allowed. The dashed links between the Internet firewall 112, the internal firewall 118 and the device 124 demonstrates links via which a transmission of a packet has been accepted unwantedly. That is, the dashed links demonstrate a security risk, if access to a private service provided by the device 124 is allowed from the Internet 100. There is therefore a need to detect the security risk and reconfigure the Internet firewall 112 and/or the internal firewall 118.

Firewall analysis and risk detection may be done by looking at matching rules of a single firewall or several firewalls one-by-one, to detect the security risks. However, it would be desirable to perform firewall analysis and risk detection for several firewalls at once. Moreover, if firewall analysis and risk detection would be done using the brute-force approach and scanning the given service addresses of the devices 122 - 128, resource and time consumption would be high. Hence, it is also desirable to reduce the number of scans required for performing firewall analysis and risk detection. Embodiments of the present disclosure therefore enable finding the relevant devices 122 - 128, and ports of the devices 122 - 128, by utilizing the exact knowledge from firewalls.

Moreover, if firewall analysis and risk detection would be performed using periodic scanning and requiring a response from each of the services of the device 122 - 128, the analysis could not be performed without a responding service when the scan is done. Embodiments of the present disclosure therefore enable firewall analysis and risk detection risky openings without a responding service behind a target address, such as an address of the device 124.

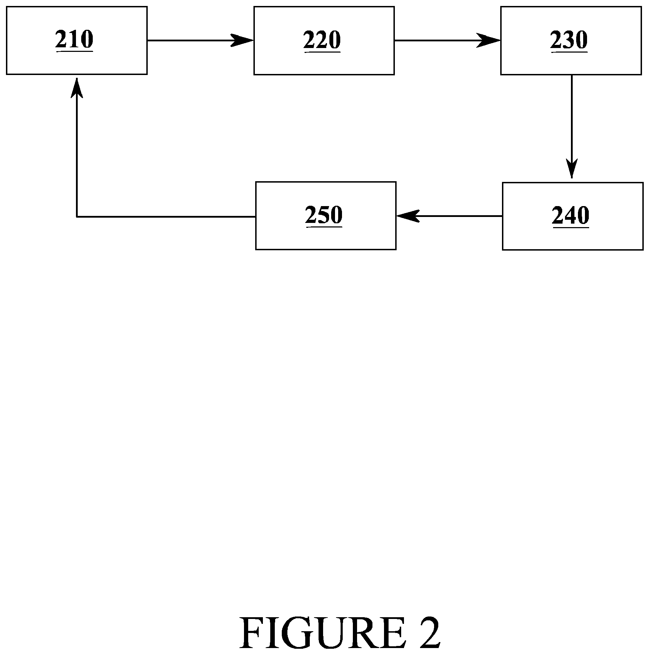

FIGURE 2 illustrates an example process in accordance with at least some embodiments. At phase 210, a ruleset may be exported from each firewall in a firewall configuration, such as from each firewall 112 - 118 illustrated in FIGURE 1. A configuration of a firewall may define how said firewall is connected to each of the other firewall. A ruleset of a firewall may define which packets are allowed to pass said firewall.

The ruleset may comprise for example at least one of an identity of the firewall in question, source zone, destination zone, source addresses, destination addresses, ports or action. The ruleset may be in a text format initially. That is, the configurations may be in a format that represent characters of material readable by a human, i.e., plain text.

The ruleset for each firewall may be based on the configuration. A ruleset of each firewall may be independent of rulesets of other firewalls, so individually the rulesets might not be based on the configuration. However, a ruleset may be affected by firewall's settings. For example, a firewall may have a setting that negates all firewall rules, e.g., turns all "allow" rules into "deny", and vice versa, which may be taken into account when converting the ruleset into boolean expression by negating the expression. However, the configuration of the firewall may affect how rulesets from several firewalls are combined into a boolean expression, e.g., if two firewalls are in a series, a ruleset of a first firewall may be converted into a first boolean expression and a ruleset of a second firewall may be converted into a second boolean expression. The first and second boolean expressions may be then combined using an AND clause.

At phase 220, the firewall rulesets may be converted to the Boolean expression. That is, the ruleset of each of the firewalls 112 - 118 may be converted from the text format to the Boolean expression. The Boolean expression of a binary nubmer 1011 may be expressed for example as follows: VARIABLE1 (=1) AND NOT VARIABLE2 (=0) AND VARIABLE3 (=1) AND VARIABLE4 (=1).

The Boolean expression of the ruleset of each of the firewalls 112 - 118 may be hence determined. The Boolean expression of a configuration may comprise a series of zeros and ones.

At phase 230, internal services reachable from public Internet, like Internet 100, may be determined. For example, a Boolean value over the Boolean expression of the configurations of all of the firewalls 112 - 118 may be determined and a security risk in the operator network 110 may be detected when the determined Boolean value solution is true. With reference to FIGURE 1, the security risk may be associated with the device 124, as the device 124 may be configured to provide a private service but the firewalls 112 and 118 pass packets through unwantedly.

At phase 240, the service metadata database 130 may be queried to check whether a service is public or private. The service metadata base 130 may be queried after detecting the security risk concerning at least one of the firewalls 112 - 118. That is, the service metadata base 130 may be queried after determining the Boolean value as true. The process proceeds to phase 250 if the service, provided by a device that is behind the firewalls 112 - 118, is private.

At phase 250, a firewall rule may be added to block unwanted access if the service is private. Unwanted traffic may be blocked in various ways. For example, unwanted traffic may be blocked by modifying existing allow rule from the internet perimeter firewall (closest to the internet), by modifying existing allow rule that is the closest to the target system or by adding deny rule for the target system for given host(s) to any of the firewalls in the packet's path, and add this rule before the rule that allows the packet to pass (evaluation order should be considered).

For example, at least one of the firewalls 112 - 118 may be reconfigured. More specifically, in the example scenario shown in FIGURE 1, at least one of the firewalls 112 or 118 may be reconfigured, if the device 124 is configured to provide a private service.

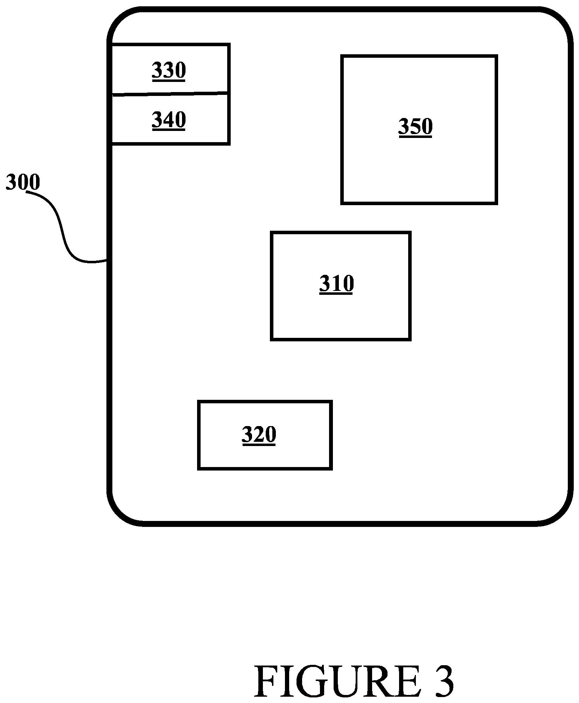

FIGURE 3 illustrates an example apparatus capable of supporting at least some embodiments. Illustrated is device 300, which may be configured to perform the herein disclosed process and embodiments. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. When processor 310 comprises more than one processor, device 300 may be a distributed device wherein processing of tasks takes place in more than one physical unit. Processor 310 may be a control device. A processing core may comprise, for example, a Cortex-A8 processing core manufactured by ARM Holdings or a Zen processing core designed by Advanced Micro Devices Corporation. Processor 310 may comprise at least one AMD Opteron and/or Intel Xeon processor. Processor 310 may comprise at least one application-specific integrated circuit, ASIC. Processor 310 may comprise at least one field-programmable gate array, FPGA. Processor 310 may be means for performing method steps in device 300, and causing performance of the method steps, such as determining, detecting, converting and/or (re-)configuring. Processor 310 may be configured, at least in part by computer instructions, to perform actions.

As used in this application, the term circuitry covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300. Memory 320 may be non-transitory.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with Ethernet and/or signalling system 7, SS7, standards, for example.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to configure alarm handling parameters.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above.

Processor 310, memory 320, transmitter 330, receiver 340 and/or UI 360 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

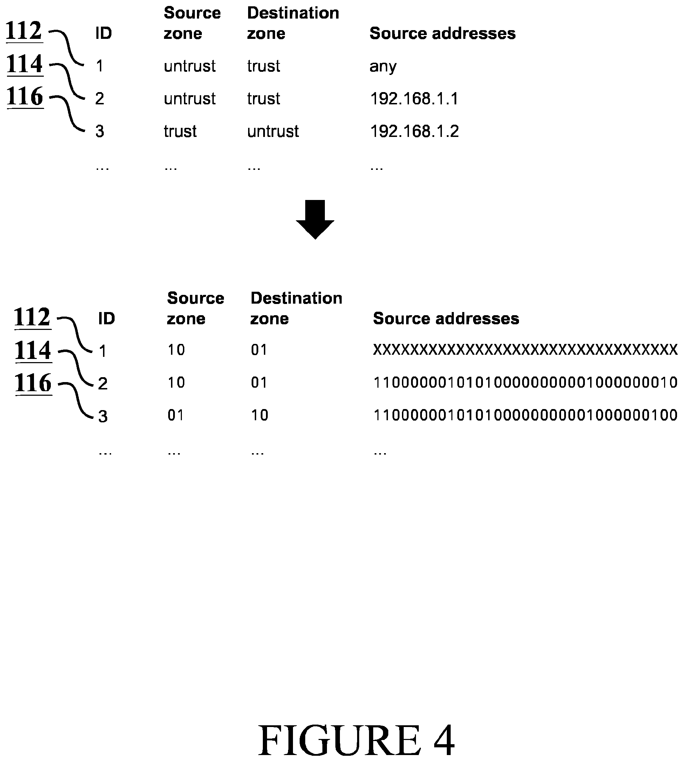

FIGURE 4 illustrates a first conversion example in accordance with at least some embodiments. As illustrated in FIGURE 4, source zones, destination zones and source address of three or more firewalls, like firewalls 112 - 118 in FIGURE 1, may be converted to the Boolean expression from the text format.

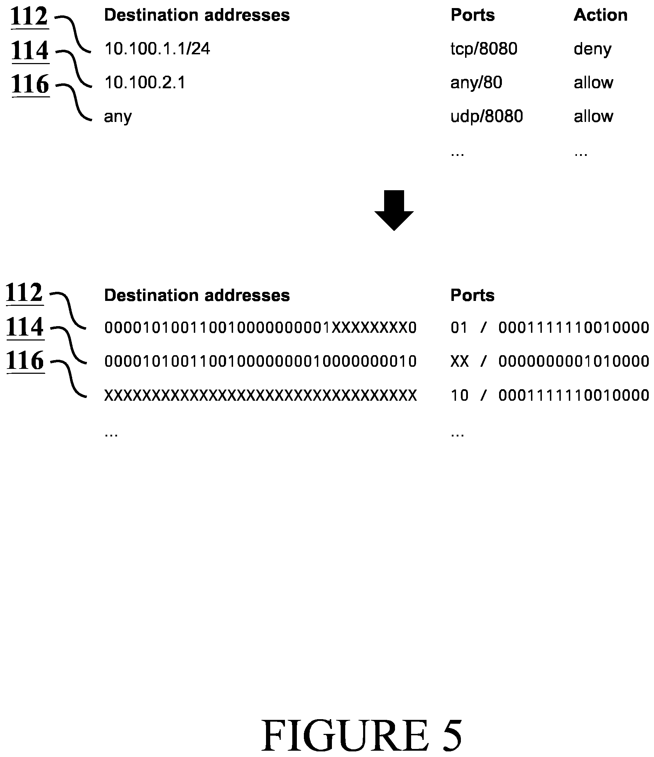

FIGURE 5 illustrates a second conversion example in accordance with at least some embodiments. As illustrated in FIGURE 5, destination addresses and ports of three or more firewalls, like firewalls 112 - 118 in FIGURE 1, may be converted to the Boolean expression from the text format.

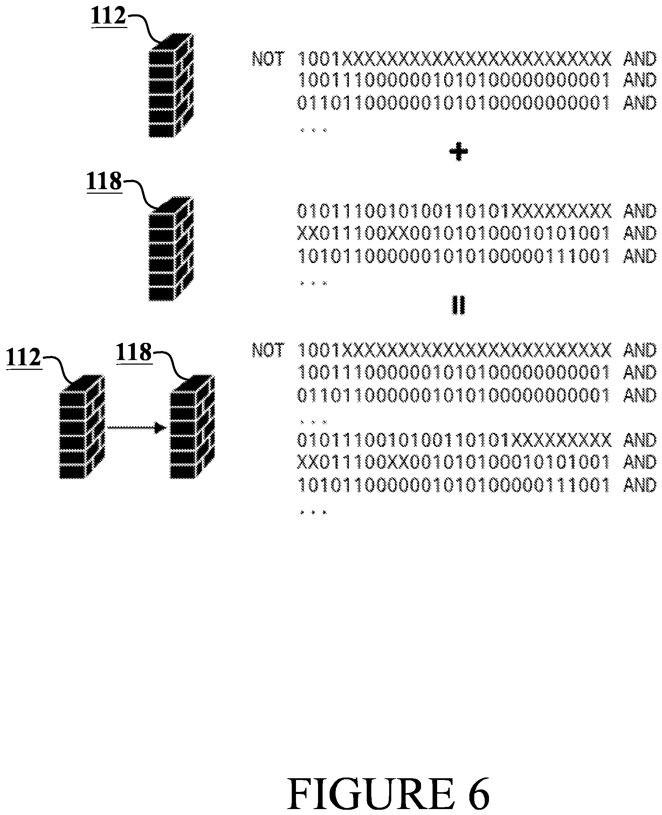

FIGURE 6 illustrates an example of determination of a Boolean value solution in accordance with at least some embodiments. The Boolean expressions of the rulesets of the firewalls 112 and 118 may be determined first and the Boolean value solution may be determined over the Boolean expression of the firewall configuration.

When a Boolean value solution evaluates to true, packets defined by the solution pass the firewall. Using a SAT solver, a list of addresses open to the public internet may be found. A SAT solver may be hence used to find Boolean value solutions to the Boolean expression that evaluate to true.

Embodiments of the present disclosure therefore enable efficient detection of security risks in communication networks, such as in the operator network 110 illustrated in FIGURE 1. A security risk may be detected by determining a Boolean value solution over Boolean expressions of at least two firewalls, such as the firewalls 112 and 118 of FIGURE 1. When the Boolean value solution is true, a security risk associated with a device located in a network of an operator, such as in the operator network 100, may be determined and at least one of the at least two firewalls reconfigured accordingly.

Embodiments of the present disclosure may be particularly beneficial if there are at least three firewalls, such as the firewalls 112, 114 and 118, between Internet 100 and the device 124, because detection of the security risk is enabled for multiple firewalls at once.

Embodiments of the present disclosure may be applied in case of one firewall similarly. That is, the configuration of one firewall may be obtained, wherein said firewall is between the first communication network 100 and the second communication network 110. In some example embodiments, there may be a database of internal systems accompanied with information about whether each of at least one firewall should be open to public Internet or only internal systems.

A ruleset may be determined for said firewall based on the configuration and a Boolean expression of the ruleset may be determined for said firewall. The ruleset of each of the at least one firewall may be exported using an API of the at least one firewall and each ruleset may be converted into a Boolean expression.

In some example embodiments, the rules may be taken one by one based on the evaluation order and converted into a Boolean expression. FIGUREs 4 and 5 illustrate a case, wherein the outputs are in binary format. However, in some example embodiments, the output of a single rule may already be a Boolean expression.

Rules may contain several dimensions to describe packets. Categorical dimensions like a source zone, destination zone and protocol may be one-hot encoded into a binary format. Source and destination Internet Protocol, IP, addresses may be converted into their binary format for both IPv4 and and IPv6 addresses. In some example embodiments, more nuanced approach may be used, meaning that the output of a single rule conversion may already be a Boolean expression. For example, firewall rules may contain IP addresses in range(s) of addresses (e.g. 192.168.1.1-192.168.1.100) or network blocks (192.168.1.1/16) or even a list of addresses, which can be converted into binary format one by one and then combining them into a Boolean expression (IP1 OR IP2 OR IP3 OR ...).

A separate algorithm may be used to express the equivalent while minimizing the length of the Boolean expression, i.e., by dropping binary variables in the expression that could be either 0 or 1 in the expression. Binary variable may describe a specific index of the binary format, e.g., the 7th bit of an IP address. The firewall rules may comprise rules that allow only for a certain type of network traffic like a ping-command. These rules can be converted into a Boolean expression using one-hot encoding.

The firewall rulesets may contain NAT rules, which may be converted into a Boolean expression by creating a new set of binary variables. A set of binary variables may be referred to as a hop, wherein the hop may be an index of the set of binary variables. For example, hop=0 may be used for the inputs of a first firewall in a sequence, and hop=1 for the output of the first firewall, and then the input of a second firewall may be hop= 1, and the output of a second firewall may be hop=2, etc. Additionally, conditions may be created between the set of variables of hop_i and the set of variables hop_(i+1) to allow conversion of NAT rules into a Boolean expression.

The Boolean expressions of the firewalls may be combined based on the configuration. For example, with two firewalls in a sequence, the expressions may be combined with a simple AND condition, such as out1 & out2, to generate a Boolean expression that describes the output of the firewall configuration.

Boolean value solutions that evaluate to true may then be determined for said firewall. A SAT solver may be used to iterate over all the combinations of binary variables that make the Boolean expression to evaluate as true. For example, a "dd" Python library may be used for both, to create the expressions and to solve the expressions. In some example embodiments, additional conditions may be added into the Boolean expression to control the size of the output. For example, if some destination address is open to the whole public internet, there might be no need to list all possible source IP addresses one by one. Instead, a condition may be added to find destination addresses that are open only to some predetermined source IP addresses.

If no Boolean value solution is found, then no packets pass the firewall configuration. In some example embodiments, there may be a large list of binary variable combinations that evaluates the Boolean expression of the firewall configuration to true. Such Boolean value solutions may be converted back to human-readable format, to end up with a list of binary variable combinations (source zone, source address, destination zone, destination address, protocol, port) that pass the firewall configuration.

To find security risks, the obtained list of destination addresses may be compared with data from a metadata database, to find destination addresses that are classified as "internal", but still accessible through the firewalls. This way, a filtered list may be obtained, wherein the filtered list is a list of (source zone, source address, destination address, protocol, port) -combinations that are a security risk and should be denied by the firewall configuration. In some example embodiments, the first firewall's API may be used to automatically add a "deny" rule for the list of combinations.

A security risk may then be detected for said firewall quickly, when the determined Boolean value solution is true, and said firewall reconfigured accordingly.

The security risk may be hence detected using a SAT solver, to identify possible openings in the firewall when the determined Boolean expression is true with some binary variable values, i.e. the Boolean value solutions. Said openings may then be compared to service metadata in case of the second communication network. Hence, the security risk may be detected by comparing said service metadata to said openings. The steps of the example embodiments may be repeated automatically, e.g., daily or weekly, to block unwanted traffic automatically.

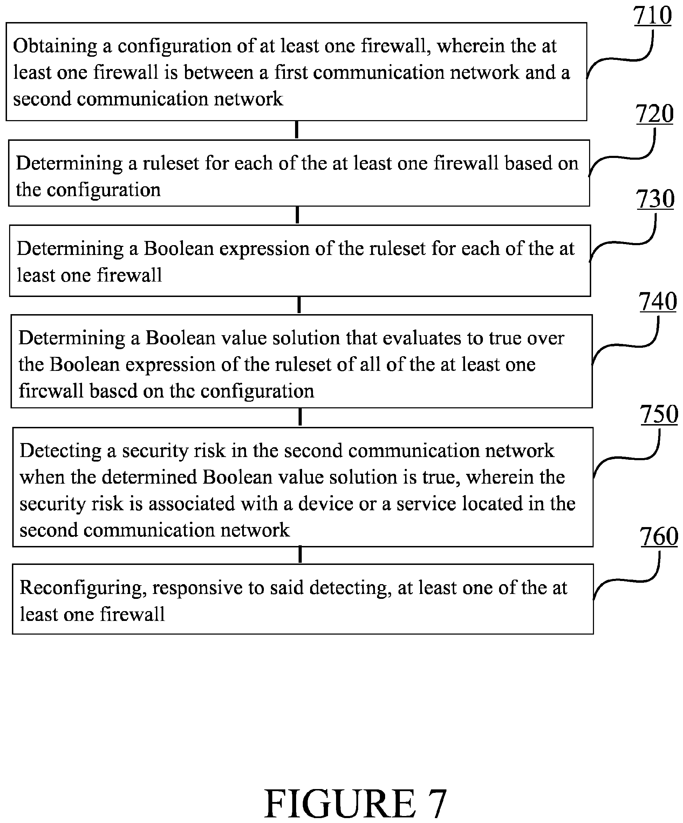

FIGURE 7 is a flow graph of a method in accordance with at least some embodiments. The phases of the illustrated method may be performed for example by apparatus 300.

The method comprises, at phase 710, obtaining a configuration of each of at least one firewall, wherein the at least one firewall is between a first communication network and a second communication network. The method further comprises, at step 720, determining a ruleset for each of the at least one firewall based on the configuration. The method also comprises, at step 730, determining Boolean expression of the ruleset for each of the at least one firewall and, at step 740, determining a Boolean value solution that evaluates to true over the Boolean expression of the ruleset of all of the at least one firewall based on the configuration. The method further comprises, at step 750, detecting a security risk in the second communication network when the determined Boolean value solution is true, wherein the security risk is associated with a device or a service located in the second communication network. Finally, the method comprises, at step 760, reconfiguring, responsive to said detecting, at least one of the at least one firewall.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in cellular communication networks.

### ACRONYMS LIST

- API: Application Programming Interface
- IP: Internet Protocol
- NAT: Network Address Translator

### REFERENCE SIGNS LIST

| | |
|---|---|
| 100 | Internet |
| 110 | Internal network of an operator |
| 112 | Internet firewall |
| 114 - 118 | Internal firewalls of the operator |
| 120 - 128 | Devices |
| 130 | Service metadata database |
| 300 - 350 | Structure of the device of FIGURE 3 |
| 710 - 760 | Phases of the method of FIGURE 7 |

## Claims

1. A method, comprising:
- obtaining a configuration of each of at least two firewalls (112 - 118), wherein the at least two firewalls (112 - 118) are between a first communication network (100) and a second communication network (110) and the configuration defines how the at least two firewalls (112 - 118) are connected to each other;
- determining a ruleset for each of the at least two firewalls (112 - 118) based on the configuration;
- determining a Boolean expression of the ruleset for each of the at least two firewalls (112 - 118);
- determining a Boolean value solution that evaluates to true over the Boolean expression of the ruleset of all of the at least two firewalls (112 - 118) based on the configuration;
- detecting a security risk in the second communication network (110) when the determined Boolean value solution is true, wherein the security risk is associated with a service located in the second communication network (110);
- querying, after detecting the security risk, a service metadata database to check whether the service is public or private; and
- reconfiguring, responsive to said detecting, at least one of the at least two firewalls (112 - 118) by adding a firewall rule to block unwanted access if the service is private.

2. The method according to claim 1, wherein the first communication network (100) is Internet and the second communication network (110) is a network of an operator.

3. The method according to claim 2, wherein the at least two firewalls (112 - 118) comprise at least one Internet firewall (112) and at least one internal firewall (114 - 118) in the network (110) of the operator.

4. The method according to claim 3, wherein at least one of the at least one Internet firewall (112) comprises a network address translator.

5. The method according to claim 3 or claim 4, wherein the at least one internal firewall (114 - 118) of the operator is between the at least one Internet firewall (112) and a device (120 - 128) located in the network (110) of the operator.

6. The method according to claim 5, wherein the device (120 - 128) is configured to provide a private service in the network (110) of the operator.

7. The method according to any of the preceding claims, wherein said detecting the security risk further comprises:
- identifying openings of the at least two firewalls (112 - 118);
- comparing said openings to service metadata; and
- detecting the security risk based on said comparison.

8. The method according to any of the preceding claims, wherein said determining the Boolean expression of the ruleset for each of the at least two firewalls (112 - 118) further comprises:
- converting the configuration of each of the at least two firewalls (112 - 118) from a text format to the Boolean expression.

9. The method according to any of the preceding claims, wherein said detecting the security risk in the second communication network (110) when the determined Boolean value solution is true further comprises:
- detecting that a device (120 - 128) behind the at least two firewalls (112 - 118) is configured to provide a private service.

10. The method according to any of the preceding claims, wherein the Boolean expression comprises a series of zeros and ones.

11. An apparatus (300) comprising at least one processing core and at least one memory storing instructions that, when executed by the at least one processing core, cause the apparatus (300) at least to:
- obtain a configuration of each of at least two firewalls (112 - 118), wherein the at least two firewalls (112 - 118) are between a first communication network (100) and a second communication network (110) and the configuration defines how the at least two firewalls (112 - 118) are connected to each other;
- determine a ruleset for each of the at least two firewalls (112 - 118) based on the configuration;
- determine a Boolean expression of the ruleset for each of the at least two firewalls (112 - 118);
- determine a Boolean value solution that evaluates to true over the Boolean expression of the ruleset of all of the at least two firewalls (112 - 118) based on the configuration;
- detect a security risk in the second communication network (110) when the determined Boolean value solution is true, wherein the security risk is associated with a device or a service located in the second communication network (110);
- query, after detecting the security risk, a service metadata database to check whether the service is public or private; and
- reconfigure, responsive to said detecting, at least one of the at least two firewalls (112 - 118) by adding a firewall rule to block unwanted access if the service is private.

12. An apparatus (300) according to claim 11, wherein the at least one processing core and the at least one memory storing instructions that, when executed by the at least one processing core, further cause the apparatus (300) at least to perform the method according to any of claims 2 to 10.

13. A computer program comprising instructions which, when the program is executed by an apparatus (300), cause the apparatus (300) to carry out:
- obtaining a configuration of each of at least two firewalls (112 - 118), wherein the at least two firewalls (112 - 118) are between a first communication network (100) and a second communication network (110) and the configuration defines how the at least two firewalls (112 - 118) are connected to each other;
- determining a ruleset for each of the at least two firewalls (112 - 118) based on the configuration;
- determining a Boolean expression of the ruleset for each of the at least two firewalls (112 - 118);
- determining a Boolean value solution that evaluates to true over the Boolean expression of the ruleset of all of the at least two firewalls (112 - 118) based on the configuration;
- detecting a security risk in the second communication network (110) when the determined Boolean value solution is true, wherein the security risk is associated with a service located in the second communication network (110);
- querying, after detecting the security risk, a service metadata database to check whether the service is public or private; and
- reconfiguring, responsive to said detecting, at least one of the at least two firewalls (112 - 118) by adding a firewall rule to block unwanted access if the service is private.

14. A computer program according to claim 13, further comprising instructions which, when the program is executed by an apparatus (300), cause the apparatus (300) to carry out the method according to any of claims 2 to 10.

## Patentansprüche

1. Verfahren, umfassend:
- Erhalten einer Konfiguration jeder von mindestens zwei Firewalls (112-118), wobei sich die mindestens zwei Firewalls (112-118) zwischen einem ersten Kommunikationsnetzwerk (100) und einem zweiten Kommunikationsnetzwerk (110) befinden und die Konfiguration definiert, wie die mindestens zwei Firewalls (112-118) miteinander verbunden sind;
- Bestimmen eines Regelsatzes für jede der mindestens zwei Firewalls (112-118) auf Grundlage der Konfiguration;
- Bestimmen eines booleschen Ausdrucks des Regelsatzes für jede der mindestens zwei Firewalls (112-118);
- Bestimmen einer Lösung mit booleschem Wert, die bei Auswertung über den booleschen Ausdruck des Regelsatzes aller der mindestens zwei Firewalls (112-118) auf Grundlage der Konfiguration "wahr" ergibt;
- Erkennen eines Sicherheitsrisikos in dem zweiten Kommunikationsnetzwerk (110), wenn die bestimmte Lösung mit booleschem Wert wahr ist, wobei das Sicherheitsrisiko mit einem Dienst verknüpft ist, der in dem zweiten Kommunikationsnetzwerk (110) angesiedelt ist;
- Abfragen einer Dienstmetadaten-Datenbank nach Erkennen des Sicherheitsrisikos, um zu überprüfen, ob der Dienst öffentlich oder privat ist; und
- Neukonfigurieren, in Reaktion auf dieses Erkennen, mindestens einer der mindestens zwei Firewalls (112-118) durch Hinzufügen einer Firewall-Regel, um unerwünschten Zugriff zu blockieren, wenn der Dienst privat ist.

2. Verfahren nach Anspruch 1, wobei das erste Kommunikationsnetzwerk (100) das Internet ist und das zweite Kommunikationsnetzwerk (110) ein Netzwerk eines Betreibers ist.

3. Verfahren nach Anspruch 2, wobei die mindestens zwei Firewalls (112-118) mindestens eine Internet-Firewall (112) und mindestens eine interne Firewall (114-118) in dem Netzwerk (110) des Betreibers umfassen.

4. Verfahren nach Anspruch 3, wobei mindestens eine der mindestens einen Internet-Firewall (112) einen Netzwerkadressübersetzer umfasst.

5. Verfahren nach Anspruch 3 oder Anspruch 4, wobei sich die mindestens eine interne Firewall (114-118) des Betreibers zwischen der mindestens einen Internet-Firewall (112) und einer Vorrichtung (120-128) befindet, die in dem Netzwerk (110) des Betreibers angesiedelt ist.

6. Verfahren nach Anspruch 5, wobei die Vorrichtung (120-128) so konfiguriert ist, dass sie einen privaten Dienst in dem Netzwerk (110) des Betreibers bereitstellt.

7. Verfahren nach einem der vorstehenden Ansprüche, wobei das Erkennen des Sicherheitsrisikos weiter umfasst:
- Identifizieren von Öffnungen der mindestens zwei Firewalls (112-118);
- Vergleichen der Öffnungen mit Dienstmetadaten; und
- Erkennen des Sicherheitsrisikos auf Grundlage des Vergleichs.

8. Verfahren nach einem der vorstehenden Ansprüche, wobei das Bestimmen des booleschen Ausdrucks des Regelsatzes für jede der mindestens zwei Firewalls (112-118) weiter umfasst:
- Konvertieren der Konfiguration jeder der mindestens zwei Firewalls (112-118) von einem Textformat in den booleschen Ausdruck.

9. Verfahren nach einem der vorstehenden Ansprüche, wobei das Erkennen des Sicherheitsrisikos in dem zweiten Kommunikationsnetzwerk (110), wenn die bestimmte Lösung mit booleschem Wert wahr ist, weiter umfasst:
- Erkennen, dass eine Vorrichtung (120-128) hinter den mindestens zwei Firewalls (112-118) so konfiguriert ist, dass sie einen privaten Dienst bereitstellt.

10. Verfahren nach einem der vorstehenden Ansprüche, wobei der boolesche Ausdruck eine Folge von Nullen und Einsen umfasst.

11. Einrichtung (300), die mindestens einen Prozessorkern und mindestens einen Speicher umfasst, der Anweisungen speichert, die, wenn sie von dem mindestens einen Prozessorkern ausgeführt werden, bewirken, dass die Einrichtung (300) mindestens:
- eine Konfiguration jeder von mindestens zwei Firewalls (112-118) erhält, wobei sich die mindestens zwei Firewalls (112-118) zwischen einem ersten Kommunikationsnetzwerk (100) und einem zweiten Kommunikationsnetzwerk (110) befinden und die Konfiguration definiert, wie die mindestens zwei Firewalls (112-118) miteinander verbunden sind;
- auf Grundlage der Konfiguration für jede der mindestens zwei Firewalls (112-118) einen Regelsatz bestimmt;
- für jede der mindestens zwei Firewalls (112-118) einen booleschen Ausdruck des Regelsatzes bestimmt;
- eine Lösung mit booleschem Wert bestimmt, die bei Auswertung über den booleschen Ausdruck des Regelsatzes aller der mindestens zwei Firewalls (112-118) auf Grundlage der Konfiguration "wahr" ergibt;
- ein Sicherheitsrisiko in dem zweiten Kommunikationsnetzwerk (110) erkennt, wenn die bestimmte Lösung mit booleschem Wert wahr ist, wobei das Sicherheitsrisiko mit einer Vorrichtung oder einem Dienst verknüpft ist, die bzw. der in dem zweiten Kommunikationsnetzwerk (110) angesiedelt ist;
- nach Erkennen des Sicherheitsrisikos eine Dienstmetadaten-Datenbank abfragt, um zu überprüfen, ob der Dienst öffentlich oder privat ist; und
- in Reaktion auf dieses Erkennen mindestens eine der mindestens zwei Firewalls (112-118) durch Hinzufügen einer Firewall-Regel neu konfiguriert, um unerwünschten Zugriff zu blockieren, wenn der Dienst privat ist.

12. Einrichtung (300) nach Anspruch 11, wobei der mindestens eine Prozessorkern und der mindestens eine Speicher, der Anweisungen speichert, die, wenn sie von dem mindestens einen Prozessorkern ausgeführt werden, weiter bewirken, dass die Einrichtung (300) mindestens das Verfahren nach einem der Ansprüche 2 bis 10 durchführt.

13. Computerprogramm, das Anweisungen umfasst, die, wenn das Programm von einer Einrichtung (300) ausgeführt wird, bewirken, dass die Einrichtung (300) ausführt:
- Erhalten einer Konfiguration jeder von mindestens zwei Firewalls (112-118), wobei sich die mindestens zwei Firewalls (112-118) zwischen einem ersten Kommunikationsnetzwerk (100) und einem zweiten Kommunikationsnetzwerk (110) befinden und die Konfiguration definiert, wie die mindestens zwei Firewalls (112-118) miteinander verbunden sind;
- Bestimmen eines Regelsatzes für jede der mindestens zwei Firewalls (112-118) auf Grundlage der Konfiguration;
- Bestimmen eines booleschen Ausdrucks des Regelsatzes für jede der mindestens zwei Firewalls (112-118);
- Bestimmen einer Lösung mit booleschem Wert, die bei Auswertung über den booleschen Ausdruck des Regelsatzes aller der mindestens zwei Firewalls (112-118) auf Grundlage der Konfiguration "wahr" ergibt;
- Erkennen eines Sicherheitsrisikos in dem zweiten Kommunikationsnetzwerk (110), wenn die bestimmte Lösung mit booleschem Wert wahr ist, wobei das Sicherheitsrisiko mit einem Dienst verknüpft ist, der in dem zweiten Kommunikationsnetzwerk (110) angesiedelt ist;
- Abfragen einer Dienstmetadaten-Datenbank nach Erkennen des Sicherheitsrisikos, um zu überprüfen, ob der Dienst öffentlich oder privat ist; und
- Neukonfigurieren, in Reaktion auf dieses Erkennen, mindestens einer der mindestens zwei Firewalls (112-118) durch Hinzufügen einer Firewall-Regel, um unerwünschten Zugriff zu blockieren, wenn der Dienst privat ist.

14. Computerprogramm nach Anspruch 13, das weiter Anweisungen umfasst, die, wenn das Programm von einer Einrichtung (300) ausgeführt wird, bewirken, dass die Einrichtung (300) das Verfahren nach einem der Ansprüche 2 bis 10 ausführt.

## Revendications

1. Procédé, comprenant :
- l'obtention d'une configuration de chacun d'au moins deux pare-feu (112-118), dans lequel les au moins deux pare-feu (112-118) se trouvent entre un premier réseau de communication (100) et un second réseau de communication (110) et la configuration définit comment les au moins deux pare-feu (112-118) sont connectés l'un à l'autre ;
- la détermination d'un ensemble de règles pour chacun des au moins deux pare-feu (112-118) sur la base de la configuration ;
- la détermination d'une expression booléenne de l'ensemble de règles pour chacun des au moins deux pare-feu (112-118) ;
- la détermination d'une solution de valeur booléenne qui s'évalue comme vraie sur l'expression booléenne de l'ensemble de règles de tous les au moins deux pare-feu (112-118) sur la base de la configuration ;
- la détection d'un risque de sécurité dans le second réseau de communication (110) lorsque la solution de valeur booléenne déterminée est vraie, dans lequel le risque de sécurité est associé à un service situé dans le second réseau de communication (110) ;
- l'interrogation, après avoir détecté le risque de sécurité, d'une base de données de métadonnées de service pour vérifier si le service est public ou privé ; et
- la reconfiguration, en réponse à ladite détection, d'au moins un des au moins deux pare-feu (112-118) en ajoutant une règle de pare-feu pour bloquer un accès indésirable si le service est privé.

2. Procédé selon la revendication 1, dans lequel le premier réseau de communication (100) est Internet et le second réseau de communication (110) est un réseau d'un opérateur.

3. Procédé selon la revendication 2, dans lequel les au moins deux pare-feu (112-118) comprennent au moins un pare-feu Internet (112) et au moins un pare-feu interne (114-118) dans le réseau (110) de l'opérateur.

4. Procédé selon la revendication 3, dans lequel au moins un de l'au moins un pare-feu Internet (112) comprend un traducteur d'adresse réseau.

5. Procédé selon la revendication 3 ou la revendication 4, dans lequel l'au moins un pare-feu interne (114-118) de l'opérateur est situé entre l'au moins un pare-feu Internet (112) et un dispositif (120-128) situé dans le réseau (110) de l'opérateur.

6. Procédé selon la revendication 5, dans lequel le dispositif (120-128) est configuré pour fournir un service privé dans le réseau (110) de l'opérateur.

7. Procédé selon l'une quelconque des revendications précédentes, dans lequel ladite détection du risque de sécurité comprend en outre :
- l'identification d'ouvertures des au moins deux pare-feu (112-118) ;
- la comparaison desdites ouvertures aux métadonnées de service ; et
- la détection du risque de sécurité sur la base de ladite comparaison.

8. Procédé selon l'une quelconque des revendications précédentes, dans lequel la détermination de l'expression booléenne de l'ensemble de règles pour chacun des au moins deux pare-feu (112-118) comprend en outre :
- la conversion de la configuration de chacun des au moins deux pare-feu (112-118) d'un format texte à l'expression booléenne.

9. Procédé selon l'une quelconque des revendications précédentes, dans lequel ladite détection du risque de sécurité dans le second réseau de communication (110) lorsque la solution de valeur booléenne déterminée est vraie comprend en outre :
- la détection qu'un dispositif (120-128) derrière les au moins deux pare-feu (112-118) est configuré pour fournir un service privé.

10. Procédé selon l'une quelconque des revendications précédentes, dans lequel l'expression booléenne comprend une série de zéros et de uns.

11. Appareil (300) comprenant au moins un cœur de traitement et au moins une mémoire stockant des instructions qui, lorsqu'elles sont exécutées par les un ou plusieurs cœurs de traitement, amènent l'appareil (300) à au moins :
- obtenir une configuration de chacun d'au moins deux pare-feu (112-118), dans lequel les au moins deux pare-feu (112-118) se trouvent entre un premier réseau de communication (100) et un second réseau de communication (110) et la configuration définit comment les au moins deux pare-feu (112-118) sont connectés l'un à l'autre ;
- déterminer un ensemble de règles pour chacun des au moins deux pare-feu (112-118) sur la base de la configuration ;
- déterminer une expression booléenne de l'ensemble de règles pour chacun des au moins deux pare-feu (112-118) ;
- déterminer une solution de valeur booléenne qui s'évalue comme vraie sur l'expression booléenne de l'ensemble de règles de la totalité des au moins deux pare-feu (112-118) sur la base de la configuration ;
- détecter un risque de sécurité dans le second réseau de communication (110) lorsque la solution de valeur booléenne déterminée est vraie, dans lequel le risque de sécurité est associé à un dispositif ou à un service situé dans le second réseau de communication (110) ;
- interroger, après avoir détecté le risque de sécurité, une base de données de métadonnées de service pour vérifier si le service est public ou privé ; et
- reconfigurer, en réponse à ladite détection, au moins l'un des au moins deux pare-feu (112-118) en ajoutant une règle de pare-feu pour bloquer un accès indésirable si le service est privé.

12. Appareil (300) selon la revendication 11, dans lequel l'au moins un cœur de traitement et l'au moins une mémoire stockant des instructions qui, lorsqu'elles sont exécutées par l'au moins un cœur de traitement, amènent en outre à l'appareil (300) à mettre en œuvre le procédé selon l'une quelconque des revendications 2 à 10.

13. Programme informatique comprenant des instructions qui, lorsque le programme est exécuté par un appareil (300), amènent l'appareil (300) à réaliser :
- l'obtention d'une configuration de chacun des au moins deux pare-feu (112-118), dans lequel les au moins deux pare-feu (112-118) se trouvent entre un premier réseau de communication (100) et un second réseau de communication (110) et la configuration définit comment les au moins deux pare-feu (112-118) sont connectés l'un à l'autre ;
- la détermination d'un ensemble de règles pour chacun des au moins deux pare-feu (112-118) sur la base de la configuration ;
- la détermination d'une expression booléenne de l'ensemble de règles pour chacun des au moins deux pare-feu (112-118) ;
- la détermination d'une solution de valeur booléenne qui s'évalue comme vraie sur l'expression booléenne de l'ensemble de règles de la totalité des au moins deux pare-feu (112-118) sur la base de la configuration ;
- la détection d'un risque de sécurité dans le second réseau de communication (110) lorsque la solution de valeur booléenne déterminée est vraie, dans lequel le risque de sécurité est associé à un service situé dans le second réseau de communication (110) ;
- l'interrogation, après avoir détecté le risque de sécurité, d'une base de données de métadonnées de service pour vérifier si le service est public ou privé ; et
- la reconfiguration, en réponse à ladite détection, d'au moins un des au moins deux pare-feu (112-118) en ajoutant une règle de pare-feu pour bloquer un accès indésirable si le service est privé.

14. Programme informatique selon la revendication 13, comprenant en outre des instructions qui, lorsque le programme est exécuté par un appareil (300), amènent l'appareil (300) à réaliser le procédé selon l'une quelconque des revendications 2 à 10.
